# EUROPÄISCHE PATENTSCHRIFT

(11) **EP 3 807 084 B1**
(45) Veröffentlichungstag und Bekanntmachung des Hinweises auf die Patenterteilung: **24.08.2022**
(21) Anmeldenummer: 19736605.7
(22) Anmeldetag: 18.06.2019
(51) Int. Cl.: B32B 3/16, F16C 1/02, F16F 1/00, B32B 1/08, B32B 3/02, B32B 3/22, B32B 5/02, B32B 5/12, B32B 5/26, B32B 5/28, B32B 7/02, B32B 25/10

(54) **ANORDNUNG ZUR ÜBERTRAGUNG VON TORSIONSMOMENTEN, INSBESONDERE ALS TORSIONSFEDER ODER ANTRIEBSWELLE, AUS FASERVERBUNDWERKSTOFFEN ZUR ERZIELUNG EINER HOHEN SPEZIFISCHEN MATERIALAUSNUTZUNG**
ARRANGEMENT FOR TRANSFERRING TORSION TORQUE, PARTICULARLY IN THE FORM OF A TORSION SPRING OR DRIVE SHAFT, MADE OF COMPOSITE FIBER MATERIALS IN ORDER TO ACHIEVE A HIGH SPECIFIC MATERIAL USAGE
DISPOSITIF POUR LA TRANSMISSION DE MOMENTS DE TORSION, EN PARTICULIER COMME RESSORT DE TORSION OU ARBRE D'ENTRAÎNEMENT, EN MATÉRIAUX COMPOSITES FIBREUX POUR OBTENIR UNE HAUTE UTILISATION DE MATÉRIAUX SPECIFIQUES

(30) Priorität: 18.06.2018 DE 102018114583; 16.04.2019 DE 202019102181 U
(43) Veröffentlichungstag der Anmeldung: 21.04.2021
(73) Patentinhaber: NEMOS GmbH, 47057 Duisburg (DE)
(72) Erfinder: PECKOLT, Jan, 47057 Duisburg (DE); VILSMEIER, Roland, 47057 Duisburg (DE); PUETZ, Jan, 47057 Duisburg (DE)
(74) Vertreter: Freischem & Partner Patentanwälte mbB
(86) Internationale Anmeldenummer: PCT/EP2019/066068
(87) Internationale Veröffentlichungsnummer: WO 2019/243354

(56) Entgegenhaltungen:
- EP-A2- 0 351 723

## Beschreibung

### Problemstellung

Torsionsbelastete Rohre und ähnliche, drehmomenttragende Bauteile erfahren mehrachsige Spannungszustände. So setzt sich die Schubspannung in einem gedachten, senkrechten Schnitt durch ein torsionsbelastetes Rohr entsprechend des Mohrschen Spannungskreises in zwei orthogonale Hauptspannungen in den Richtungen +/- 45°, je eine Richtung unter Zug- und Druckspannung, um. Dieser Spannungszustand ist für amorphe Werkstoffen (Metalle), entsprechend ihrer Werkstoffgrenzen unproblematisch. Faserverbundwerkstoffe sind jedoch besonders empfindlich gegenüber mehrachsigen Spannungszuständen. Um die Hauptspannungen zu tragen, werden die Laminatschichten bevorzugt in die Hauptspannungsrichtungen gelegt. Klassische Torsionsrohre aus Faserverbundwerkstoffen werden daher aus Fasern unterschiedlichen Drehsinns aufgebaut. Beispielsweise tragen Fasern mit einer Wickelrichtung von +45 Grad die Zugspannungen und Fasern mit einer Wickelrichtung von -45 Grad die Druckspannungen. Hierbei liegen die Fasern der beiden Richtungen orthogonal zueinander.

Nicht parallel zueinander liegende Laminatschichten können jedoch ungünstige Wechselwirkungen erfahren:
Eine Zug- oder Druckbelastung in einer Faserrichtung führt zu einer positiven oder negativen Längsdehnung. Entsprechend der direkten Anbindung in einem durchgehenden Laminataufbau führt dies zu einer Querdehnung in der jeweils anderen Faserrichtung. Jedoch weisen Faserverbundwerkstoffe nur eine geringe Dehnfähigkeit quer zur Faserrichtung auf. Dies hat vorwiegend zwei Gründe: Die Fasern liegen in engen Abständen zueinander und haben eine wesentlich höhere Steifigkeit als der umgebende Matrixwerkstoff, wodurch nur wenig Dehnstrecke zur Verfügung steht, so dass bereits bei geringen Querdehnungen des Verbunds der Matrixwerkstoff überdehnt wird (vorwiegend zutreffend bei Verbundwerkstoffen mit amorphen Fasern, z.B. Glasfasern), oder die Fasern sind aufgrund ihrer anisotropen Beschaffenheit selbst so empfindlich, dass sie bereits bei geringen Querlasten geschädigt werden (z.B. zutreffend bei Carbonfasern).

Bereits bei geringen Querdehnungen kommt es daher zur Bildung interlaminarer Risse, wodurch die Längstragfähigkeit des so geschädigten Verbunds herabgesetzt wird und es zum Versagen des Bauteils kommen kann. Betroffen sind aufgrund verminderter Stabilität vor allem druckbelastete Bereiche des Laminats.

Wiederholte Lastwechsel führen hierbei zu einer beschleunigten Rissausbreitung, so dass zur allgemeinen Absenkung des Dehnungsniveaus i.A. hohe Fatigue-Zuschläge bei der Dimensionierung erforderlich sind. Dies bedeutet, dass ein Bauteil bei einer hohen Anzahl an erwarteten Lastzyklen mit deutlich mehr Materialeinsatz realisiert werden muss, um die Dehnungen und Spannungen zu begrenzen. Dies hat vor allem bei Federbauteilen (hier Torsionsfedern) einen stark negativen Einfluss, da die speicherbare, elastische Energie proportional zum Produkt aus Spannung und Dehnung ist. Beziehungsweise ist auf Grund des linearen Zusammenhangs der beiden Größen zueinander die speicherbare Energie proportional zum Quadrat der Spannung oder zum Quadrat der Dehnung.

Die im Allgemeinen ungünstige Materialauslastung ist somit ein wesentlicher Grund für die bisher geringe Verbreitung von Faserverbundwerkstoffen in derartigen Anwendungen.

Eine weitere Problematik stellt das Versagen von Faserverbund-Torsionsbauteilen durch Schubbelastungen dar. Hierbei kommt es durch unzureichendes Verformungsvermögen zu interlaminarer Rissbildung zwischen parallelen Fasersträngen.

### Lösungsansatz

Während Torsionsträger mit herkömmlichen Laminataufbauten aufgrund oben genannter Empfindlichkeit gegenüber mehrachsigen Spannungszuständen nur relativ geringen Spannungsniveaus (bei GfK bis etwa 200 MPa) standhalten, konnten mit dem nachfolgend beschriebenen Lösungsansatz signifikant höhere Spannungen (bei GfK bis etwa 600 MPa) erreicht werden. Die Verdreifachung des Spannungsniveaus hat zur Folge, dass
- torsionsübertragende Bauteile mit ca. 1/3 des Materialeinsatzes
- Torsionsfedern aufgrund näherungsweise zur Spannung linearer Dehnung mit ca. 1/9 des Materialeinsatzes
realisiert werden können.

Während Torsionsträger mit herkömmlichen Laminataufbauten aufgrund oben genannter Empfindlichkeit gegenüber mehrachsigen Spannungszuständen nur relativ geringen Spannungsniveaus standhalten (bei GfK bis etwa 300 MPa faserparallele Spannung), konnten mit dem nachfolgend beschriebenen Lösungsansatz signifikant höhere Spannungen (bei GfK bis etwa 600 MPa) erreicht werden. Die Verdopplung des Spannungsniveaus hat zur Folge, dass
- torsionsübertragende Bauteile mit ca. der Hälfte des Materialeinsatzes
- Torsionsfedern aufgrund näherungsweise zur Spannung linearer Dehnung mit ca. 1/4 des Materialeinsatzes
realisiert werden können. Neben Gewichts- und Kostenvorteilen kann das vorgeschlagene Konzept zudem erhebliche Einsparungen hinsichtlich des erforderlichen Bauraums ermöglichen.

Vorgeschlagen wird ein Aufbau mit separaten Schichten aus Einzelwendeln, die einen entgegengesetzten (Wickel-)Drehsinn der Fasern aufweisen. Als Wendel werden helixförmige Streifen mit begrenzter Breite verstanden, die in einem gewissen Steigungswinkel schraubenartig auf einer zylindrischen Mantelfläche um die Längsachse des Bauteils gewickelt sind. Die gegenläufigen Wendel stützen sich bei Belastung radial gegenseitig ab, wobei sich die Torsionsbelastung umsetzt in Zuglast(en) in der/den äußeren Wendel (1) und Drucklast(en) in der/den inneren Wendel(n) (3). Die Wendel einer (radialen) Schichtebene sollen zueinander je nach Belastungsform ihren Abstand verändern können, wodurch eine Dehnung quer zur Wendellängsrichtung ermöglicht wird. Zudem begünstigt der vorgesehene Ausgleichspalt Schubverformungen zwischen den benachbarten parallelen Wendeln einer Schicht.

Die Wendel sollen durch den vorgeschlagenen Aufbau möglichst einachsige Spannungszustände erfahren mit vorwiegend Zug- oder Drucklasten in Längsrichtung, wodurch sie überwiegend aus unidirektionalen Laminaten (Fasern in Wendellängsrichtung) oder durch leicht verseiltes Faserverbundmaterial (mit einer mittleren Faserorientierung in Wendellängsrichtung) aufgebaut werden können. In einer günstigen Ausführungsform liegen die Abweichungen der Fasern von der Wendellängsrichtung bei unter 10 Grad, weiter bevorzugt bei unter 5 Grad.

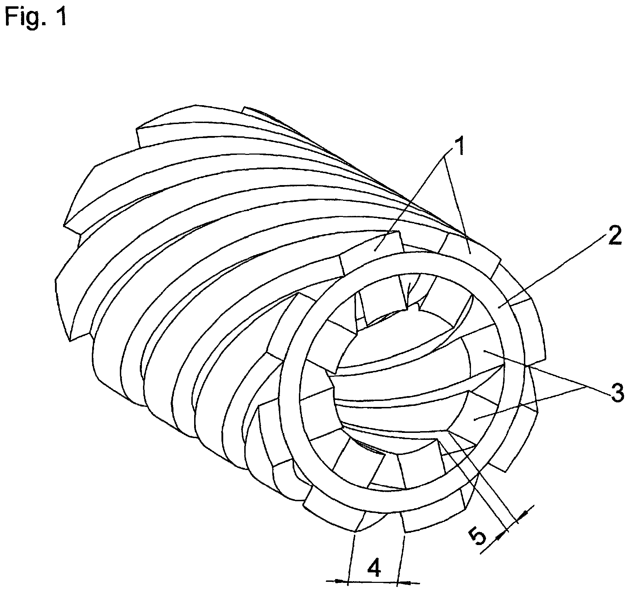

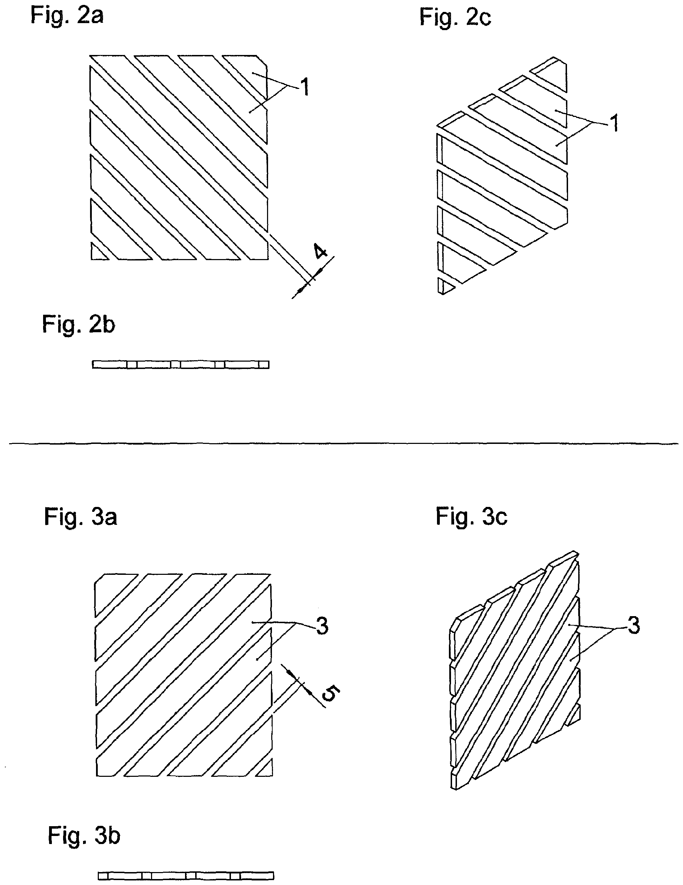

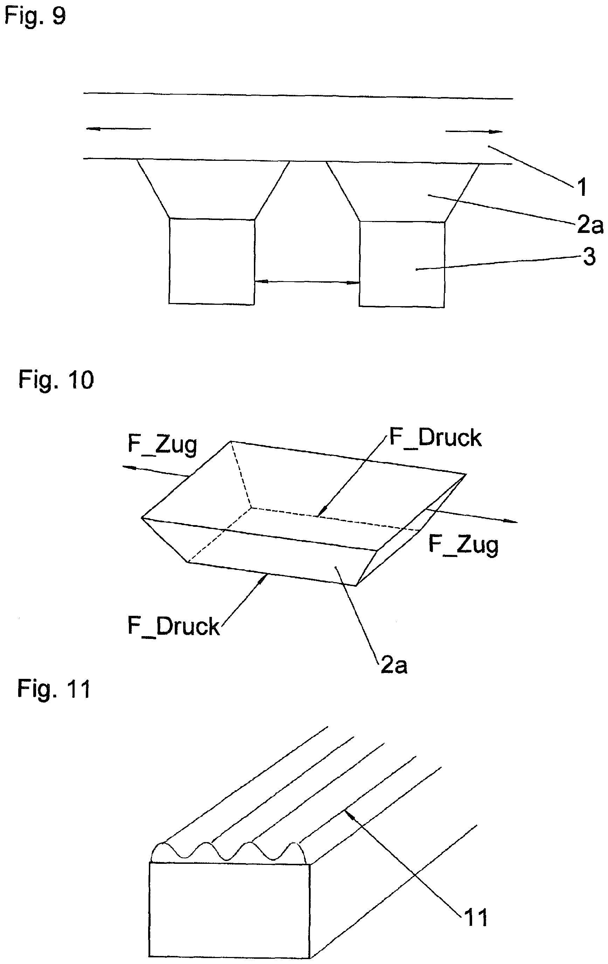

Damit die Längsdehnung der Wendel einer Schicht nicht unmittelbar auf die Wendel einer dazu quer liegenden benachbarten Schicht aufgeprägt wird und stattdessen der Querdehnungs-Ausgleich hauptsächlich in den dafür vorgesehenen Spalten zwischen den Wendeln stattfindet, ist vorgesehen, dass die Schichten zueinander durch eine Ausgleichszone entkoppelt werden, die im Folgenden "Zwischenschicht" genannt wird. Der Effekt der Querdehnungsentkopplung wird exemplarisch in Figur 9 dargestellt. Gezeigt ist beispielhaft eine Außenwendel 1, die durch eine Zuglast gedehnt wird. Innenseitig schließen sich eine Zwischenschicht 2a und eine Innenwendel 3 an. Die hier exemplarisch in einer Ausführungsvariante "a" gezeigte Zwischenschicht 2a erfährt durch die Verbindung mit der Außenwendel 1 eine Dehnung. Durch ihr eigenes Verformungsvermögen wird die Dehnung nicht (oder nur in geringem Maße) auf die druckbelasteten Innenwendel 3 aufgeprägt. Statt eine störende Querdehnung innerhalb der Innenwendel 3 zu erzeugen, führt die Dehnung lediglich zu einer Vergrößerung des Spalts 5 zwischen zwei benachbarten Innenwendeln 3, wodurch der Abstand der beiden dargestellten benachbarten Innenwendel 3 vergrößert wird (vgl. Fig. 1).

Der entsprechende Effekt wird in analoger Weise genauso erzielt für Drucklasten in den Innenwendeln 3. Hierbei ermöglichen ebenso die Zwischenschicht 2 und der Ausgleichsspalt 4, dass eine Verkürzung der Innenwendel durch Drucklasten zu einer Verkleinerung des Spalts (4) zwischen den Außenwendeln 1 führt und somit die Außenwendel 1 vor ungewollten Querkompressionen geschützt werden.

Die Volumenelemente der Zwischenschicht 2a, die beispielhaft als Quaderförmige Auflageelemente zwischen den kreuzenden Wendeln betrachtet werden können, erfahren durch eine gleichzeitige Kompression der anliegenden Innenwendel 3 in Folge der Druckkraft (F_Druck) und Längung der Außenwendel 1 in Folge der Zugkraft (F_Zug) eine Verformung zu einem Pyramidenstumpf, siehe Figur 10. Dieses Verformungsvermögen sorgt dafür, dass die Längsdehnung der Fasern einer Schicht nicht auf das Faserverbundmaterial der Wendel der benachbarten Schicht übertragen wird, was als Querdehnungsentkopplung bezeichnet werden kann.

### Abgrenzung zum Stand der Technik

Aus EP 0 351 723 A2 ist ein rohrförmiges, tordierbares Federelement bekannt, das zwei konzentrisch ineinander angeordnete Rohrkörper betrifft, die aus in einem Winkel zwischen 0° und 90° verlaufenden Fasern, Drähten, Stäben oder Lamellen gebildet sind, wobei die Wickelrichtung der Rohrkörper gegenläufig ist. Der innere Rohrkörper ist bei Torsionsbelastung auf Expansion und der äußere Rohrkörper bei Torsionsbelastung auf Kontaktion belastet. Ferner stützen sich die beiden Rohrkörper zumindest ab einer definierten Torsionsbelastung aneinander ab, wobei zwischen den Rohrkörpern eine isolierende, begrenzt elastische Schicht angeordnet ist, und die beiden Rohrkörper an ihren Enden mit je einem gemeinsamen Krafteinleitungsteil verbunden sind. Als Rohrkörper sind insbesondere blattförmige Lamellen aus Federmetall vorgesehen oder alternativ durchgehende Rohre aus einem Fasergelege. Wendel mit dazwischen liegenden Spalten aus einem Faserverbundmaterial sind nicht offenbart.

Geometrisch ähnliche Anordnungen wie in der vorliegenden Erfindung sind im Stand der Technik vor allem im Kontext von flexiblen Antriebswellen zu finden. Jedoch verfolgen diese Erfindungen eine andere Zielstellung und unterscheiden sich dementsprechend in wesentlichen Vorrichtungsmerkmalen. Beispielsweise werden in US 8,984,698 keine Faserverbund-Wendel, sondern metallische Wendel beschrieben. Oder es ist im Falle der aus US 2018/0258979 bekannten Anordnung, welche ebenso eine große geometrische Ähnlichkeit aufweist, keine elastische Zwischenschicht vorgesehen. Da diese als ein wichtiges Element, bzw. eine Voraussetzung für die Entkopplung von Faserverbund-Wendeln und den damit einhergehenden einachsigen Spannungszuständen nachgewiesen werden konnte (simulativ), zeigte sich (in experimentellen Untersuchungen) die beschriebene Verbesserung der Materialausnutzungsgrades.

### Ausführungsmerkmale

Die Wendel einer Schichtebene können je ein- oder mehrgängig ausgeführt werden. Mehrgängig bedeutet, dass je Schicht mehrere Wendel enthalten sind. Diese winden sich im Falle eines rohrförmigen Bauteils mit gleicher Steigung parallel zueinander um die Längsachse des Rohres, wobei die Wendel einer Schicht den gleichen radialen Abstand von der zentralen Längsachse des Rohres aufweisen. In einer günstigen Ausführungsform werden je Schicht mehr als drei Wendel, weiter bevorzugt mehr als sechs Wendel, weiter bevorzugt mehr als 10 Wendel verwendet.

Die Winkel der Wendel, d.h. die Steigung ihrer Gewindegänge, können entsprechend den Anforderungen einer Anwendung ausgewählt werden und beeinflussen damit die Steifigkeit des Bauteils. Bezogen auf die Längsrichtung des Bauteils (Rohrs) sind Winkel im Bereich von etwa 10 Grad bis 85 Grad bzw. in der Gegenlage von -85 Grad bis -10 Grad technisch sinnvoll. Eine günstige Ausführungsform weist für die beiden Wickelrichtungen (Drehsinne) Winkel von etwa 45 Grad und -45 Grad auf. Zum Herstellen von Kräftegleichgewichten kann von der genannten +/- 45 Grad-Anordnung jeweils um einstellige Gradzahlen abgewichen werden, woraus z.B. Anordnungen mit +40 Grad und -50 Grad resultieren.

Als Ausführungsvariante dieser Erfindung werden auch Torsionselemente vorgeschlagen, die eine größere Anzahl an Schichten beinhalten, d.h. mehr als zwei Schichten. Sie können mehrere Paarungen an Zug- und Drucklagen enthalten, die jeweils durch Zwischenschichten entkoppelt sind. Hierdurch wird der radiale Druck zwischen den einzelnen Lagen reduziert, so dass weichere Materialien eingesetzt werden können und das Gesamtbauteil auch Lasten in umgekehrtem Momenten-Drehsinn erfahren kann. Bei Umkehr der Momenten-Richtung erfahren die bisher beschriebenen Außenwendel Drucklasten (statt wie in der bisher beschriebenen Grund-Belastungsform Zuglasten) und die Innenwendel Zuglasten (statt wie in der bisher beschriebenen Grund-Belastungsform Drucklasten). Hierbei treten zwischen den Schichten Zuglasten (statt wie in der bisher beschriebenen Grund-Belastungsform Drucklasten), die über die Zwischenschicht übertragen werden müssen. Günstig sind neben der beschriebenen Variante mit 2 tragenden Schichten (eine Zug- und eine Druckschicht) auch Varianten mit 3, 4, 5, 6 oder einer größeren Anzahl an Schichten.

Es sei erwähnt, dass sich im Rahmen der vorliegenden Erfindung die Bezeichnung "Innenwendel" Wendel betrifft, welche bei Belastung des Bauteils in seiner Vorzugsrichtung Druckkräfte erfahren. Die Bezeichnung Außenwendel hingegen betrifft Wendel, die bei Belastung des Bauteils in seiner Vorzugsrichtung Zuglasten erfahren. In Fällen, in denen die beschriebenen Torsionsträger in radialer Richtung aus mehr als zwei Schichten mit Wendeln aufgebaut sind, beziehen sich die Begriffe "innen" wie "außen" auf die relative Anordnung einer Paarung von zwei Schichten zueinander, welche sich gegenseitig in radialer Richtung abstützen.

Resultat des beschriebenen Aufbaus zur Entkopplung der Wendel benachbarter Schichten zueinander und zur Entkopplung der Wendel innerhalb einer Schicht ist, dass die Spannungen in den Wendeln vorwiegend in Faserrichtung verlaufen und störende Querdehnungen unterdrückt (oder zumindest reduziert) werden. Somit kann eine hohe Auslastung des Faserverbundwerkstoffs erreicht werden, womit höhere Verformungsvermögen und Spannungen zugelassen werden können, wodurch die Bauteile mit geringerem Bauraum und geringerem Materialeinsatz als herkömmliche Systeme realisiert werden können. Mit gegebenem Aufbau kann in einer Torsionsfeder eine besonders hohe spezifische Dehnenergie gespeichert werden.

Für die Zwischenschicht (2) sieht die Erfindung mehrere Ausführungsvarianten vor:
Die Zwischenschicht kann durch ein elastisches Material realisiert sein, wodurch sie für eine Beabstandung benachbarter Schichten gegenläufiger tragender Wendel sorgt und durch ihr Verformungsvermögen eine Entkopplung der Schichten ermöglicht, wodurch eine Längsdehnung der Wendel der einen Schicht nur zu geringem Maße zu einer Querdehnung der Wendel der benachbarten Schicht führt. In einer günstigen Ausführungsform ist die Zwischenschicht mit den tragenden Wendeln verbunden, insbesondere stoffschlüssig verbunden. Dies kann von grundlegender Bedeutung sein, da hiermit insbesondere die druckbelasteten Wendel eine Fixierung erfahren und ihre freie Knicklänge (hinsichtlich Stabilitätsversagens) signifikant reduziert wird.

Für eine stoffschlüssige Anbindung können spezielle Haftvermittler eingesetzt werden, die eine besonders gute Verbindung zwischen Faserverbundmaterial und elastischer Zwischenschicht ermöglichen. Oder es kann ein Zwischenschichtmaterial verwendet werden, welches sich besonders gut mit Faserverbundmaterial verbindet, insbesondere ein Elastomer, der gemeinsam mit dem Kunstharz des Faserverbundwerkstoffs aushärtet bzw. vernetzt.

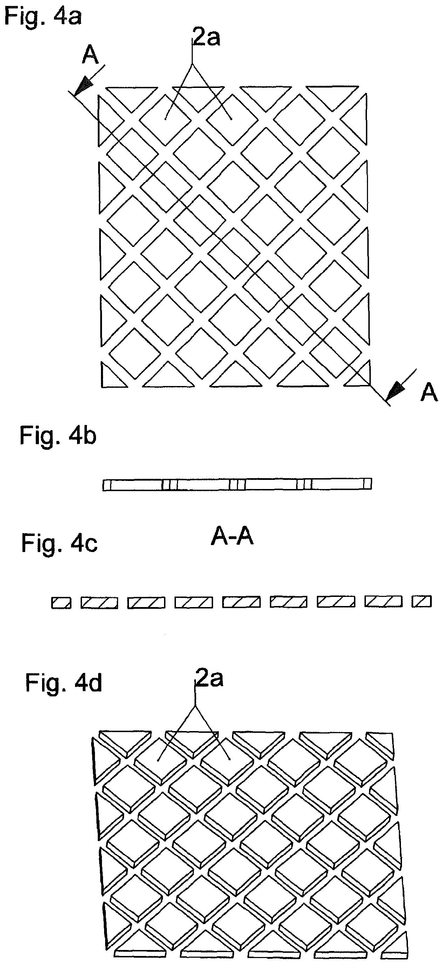

Um einen hohes Verformungsvermögen für den Ausgleich zwischen tragenden Schichten (bzw. zwischen den Außenwendeln (1) und den Innenwendeln (3) zu erhalten und gleichzeitig eine hohe Tragfähigkeit gegen radialen Druck zwischen den Schichten zu gewährleisten oder um energetische Verluste (dissipative Dämpfungseffekte) zu begrenzen, kann ein verhältnismäßig hartes Material verwendet werden, das erst durch entsprechende Formgebung das erforderliche Verformungsvermögen erhält. Im Kontext der vorliegenden Erfindung soll diese zweite Variante der Zwischenschicht (mit einem speziell geformten relativ harten Material) auch als "elastische Zwischenschicht" bezeichnet werden. Hierzu ist in den Figuren 4a bis 4d eine Anordnung dargestellt, wobei die Zwischenschicht als einzelne Rauten aufgebaut ist, die nur in den Bereichen, in denen sich Wendel kreuzen, vorhanden ist. In Bereichen, in denen in einer der tragenden Schichten ein Spalt (4 und 5) zwischen den Wendeln besteht, ist auch die Zwischenschicht unterbrochen. Hierbei weist die elastische Zwischenschicht somit Spalte auf, die als radiale Fortsetzung der Ausgleichsspalte zwischen den Wendeln einer Schicht ausgeführt sind und die Zwischenschicht entweder teilweise oder vollständig unterbrechen.

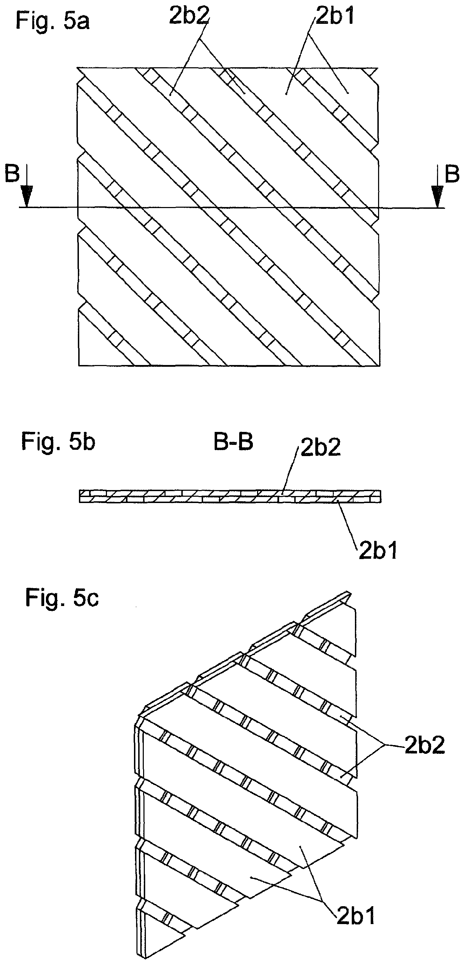

Hinsichtlich der Fertigung kann diese Formgebung vor dem Verbinden der beiden tragenden Schichten erstellt werden oder es kann durch Abtragen von Material durch die Spalte der Wendel hindurch (spanend abtragen oder per Laserabtragen oder per Wasserstrahlschnitt) das Material aus der Zwischenschicht entfernt werden, um die Unterbrechungen der Fläche zu erzeugen. Alternativ wird in den Figuren 5a bis 5c eine Anordnung vorgestellt, bei der die Zwischenschicht aus zwei Lagen (2b1) und (2b2) aufgebaut ist. Diese Lagen sind jeweils entlang der Außenwendel (1) und Innenwendel (3) angeordnet und damit flächig verbunden. Entlang der Spalte der Wendel weist die Zwischenschicht somit Spalte auf, die etwa bis zur halben Schichtstärke ausgebildet sind. Diese Lagen jeweils gemeinsam mit den Wendeln gefertigt werden oder es kann aus einer flächigen Zwischenschicht die Spalte durch nachträgliches Teil-Abtragen im Bereich der Spalte der Außen- und Innenwendel erzeugt werden. Dieses Teil-Abtragen kann z.B. auf die halbe Schichtstärke erfolgen oder es kann eine verrundete Nut (Rille) aus der Zwischenschicht herausgearbeitet werden.

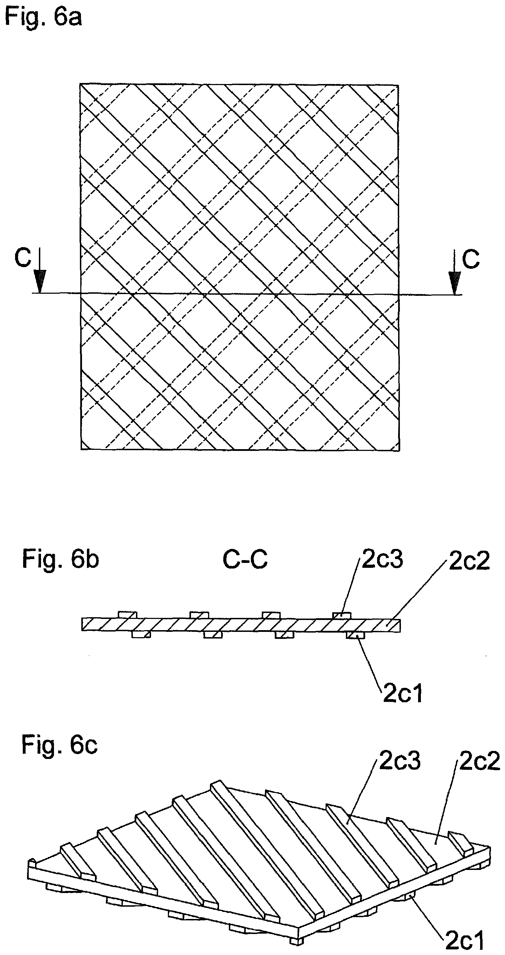

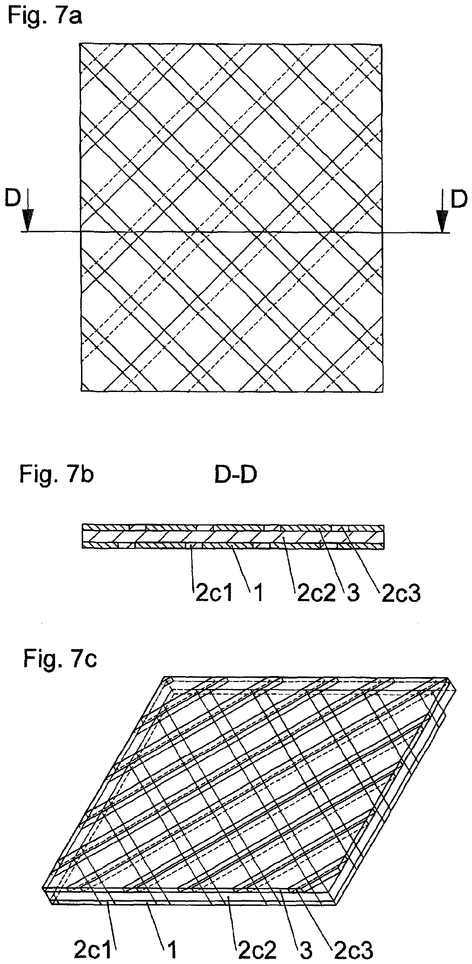

Eine weitere Ausführungsform ist bei der Verwendung von relativ weichen Materialien wie z.B. Polyurethan oder Kautschuk möglich. Hierbei wird die Zwischenschicht als gefülltes Volumen (ohne Nuten) ausgebildet. Die erforderlichen Verformungen (vorwiegend Schubverformungen zur Entkopplung der Schichten) erfolgen hierbei durch das Verformungsvermögen des weichen Materials. Eine günstige Variante hiervon ist eine Anordnung, bei der das Herausquetschen des Materials der Zwischenschicht durch die Wendel-Ausgleichsspalte hindurch gehemmt wird. Hierdurch wird die Verformung des Zwischenschichtmaterials begrenzt und der Druck zwischen den Außenwendeln und Innenwendeln setzt sich teils in einen allseitigen (hydrostatischen) Druck um, der auch bei weichen Materialien in verhältnismäßig hohem Maße zulässig ist. Figuren 6a bis 6c stellen diese geometrische Variante der Zwischenschicht (2c) dar. Die durchgängige Schicht (2c2) grenzt hierbei an die Füllung der Ausgleichsspalte der Außenwendel (2c1) und der Füllung der Ausgleichsspalte der Innenwendel (2c3). Hierbei können die Füllungen der Ausgleichspalte (2c1 und 2c3) aus dem gleichen Material realisiert werden wie die Fläche der Zwischenschicht (2c2) oder aus einem anderen Material. Günstig ist hierbei ein deutlich weicheres Material. Figuren 7a bis 7c stellen diese Variante der Zwischenschicht (mit den Elementen 2c1, 2c2, 2c3) zur Veranschaulichung in Kombination mit den dazugehörigen Wendeln (1) und (3) dar.

Eine weitere Ausführungsform ist eine Strukturierung der Zwischenschicht für ein verbessertes Dehnungsverhalten.

Wie in Figur 11 dargestellt, kann die Oberfläche der Zwischenschicht bei ihrem Kontakt zu einem Wendel Rillen oder Lamellen aufweisen, die quer zur Faserrichtung bzw. Längsausdehnung des Wendels liegen. Eine Dehnung jeweiligen Wendels setzt sich somit in eine Winkeländerung bzw. ein Verkippen der Rillen oder Lamellen um, wodurch die Entkopplungs-Eigenschaften verbessert werden. Über die dargestellte Anordnung hinaus kann dies jeweils auf beiden Seiten der Zwischenschicht erfolgen (wobei die Rillen oder Lamellen der beiden Seiten in einem Winkel zueinander stehen, in dem auch die Wendel der beiden zu entkoppelnden Schichten zueinander stehen).

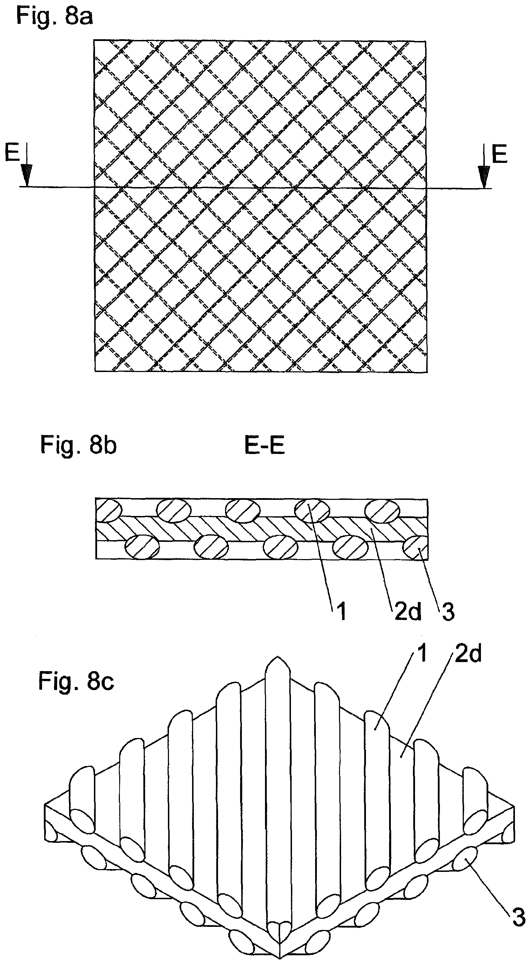

Auch für die Ausgleichsspalte zwischen den Wendeln sind gemäß der Erfindung im Allgemeinen verschiedene Ausführungsvarianten vorgesehen. Die Spalte können entweder mit einem elastischen Material gefüllt werden (wie z.B. Polyurethan, Silikon, Kautschuk, einem Schaum oder einem Epoxidharz), wodurch der oben beschriebene Effekt des hydrostatischen Drucks begünstigt wird. Oder es können die Spalte ohne Füllung belassen werden (wodurch sie das Umgebungsmedium wie z.B. Luft enthalten), so dass Ihr Verformungsvermögen unbegrenzt ist. Auch Zwischenvarianten wie eine teilweise Füllung (2d) sind möglich, siehe Figuren 8a bis 8c. Gemäß der Erfindung sind ebenso Varianten vorgesehen, bei der durch gezielte Löcher oder Lufteinschlüsse (beispielsweise durch einen kompressiblen Schaum) ein Ausweichen des Materials begünstigt wird und die Verformungseigenschaften in diesem Bereich positiv beeinflusst werden.

Für das Profil der Wendel, bzw. deren Querschnittsgeometrie bestehen verschiedene Ausführungsmöglichkeiten. Neben rechteckigen Wendeln können runde Wendel verwendet werden (Zylinder), halbzylindrische, ovale (siehe Figuren 8a bis 8c) oder auch weitgehend rechteckige Formen mit einzelnen verrundeten Seiten. Insbesondere ein rechteckiges Profil mit einer verrundeten Seitenfläche, die im Kontakt mit der Zwischenschicht steht, wird im Sinne der Erfindung als vorteilhaft angesehen, da hierdurch die in der Zwischenschicht auftretenden Schubverformungen verringert werden.

Als günstige Ausführungsvariante der Wendel selbst, können diese mindestens teilweise, insbesondere die druckbelasteten Wendel, an ihrer Oberfläche zu einer elastischen Zwischenschicht zugentlastende Fasern mit einer Orientierung quer zur Wendel-Längsrichtung enthalten. Diese Fasern können einen wesentlichen Teil der über die Zwischenschicht induzierten Querspannungen tragen. Dadurch fallen die Querspannungen bzw. die Querdehnungen im tragenden Material der Wendel (in den Fasern in Wendellängsrichtung) unter Belastung geringer aus, so dass die Wendel in Wendellängsrichtung höheren Lasten stand halten können, insbesondere auch zyklischen Lasten.

Für eine last- und verformungsgerechte Endanbindung der Wendel können diese an ihren Enden eine erhöhte Schichtdicke aufweisen, kann das Bauteil an seinen Enden einen erhöhten Rohrdurchmesser aufweisen und/oder am Ende des Bauteils kann eine veränderte Orientierung der Wendel vorliegen. Hierdurch tritt bei Belastung des Bauteils in diesen Bereichen eine geringere Längsspannung in den Wendeln auf, so dass zusätzliche Spannungen aus einer Biegung der Wendel aufnehmbar sind.

Ebenso können an den Enden der Wendel zusätzliche Endstücke angebracht sein (z.B. durch Klebeverbindungen), welche eine harmonische Biegung der Wendel und eine Übertragung der Kräfte in Wendel-Längsrichtung zu einem angrenzenden Bauteil oder eine gelenkige Anbindung der Wendel an ein Bauteil-Endstück ermöglichen.

In einer weiteren günstigen Ausführungsvariante kann die Biegezone am Ende der Wendel mit einer Verschlankung der Wendel realisiert sein, wodurch sich das Verformungsvermögen bei einer Veränderung der Steigung der Wendel unter Belastung verbessert und die zusätzliche auftretenden Biegespannungen geringer ausfallen als bei einem Wendel der vollen Breite. Hierbei wird das für die Biegung der Wendel in der Mantelebene relevante Flächenträgheitsmoment reduziert.

Neben dem dargestellten Aufbau mit jeweils zwei Schichten gegenläufiger Wendel sind auch Konstruktionen mit drei oder mehr Schichten unterschiedlichen Wendel-Orientierungen vorgesehen. Beispielsweise kann neben den beiden beschriebenen torsionstragenden Schichten mit Wendeln von etwa +/- 45 Grad zur Verbesserung der Biegesteifigkeit des Gesamtbauteil eine dritte Schicht mit Fasern in Rohr-Längsrichtung und optional auch mit Wendein und Spalten in Rohr Längsrichtung enthalten sein. Diese kann ebenfalls zur Reduktion von Querdehnungseinflüssen in radialer Richtung durch eine elastische Zwischenschicht zu den angrenzenden Schichten entkoppelt sein.

In einer günstigen Ausführungsvariante kann das aus Wendeln aufgebaute Rohr in seinem Inneren ein Rohr oder ein Kern aus flächigem Material oder Vollmaterial enthalten, insbesondere mit Fasern in Rohrlängsrichtung oder Fasern in etwa 45 Grad Wickelrichtung bezogen auf die Rohrlängsrichtung. Der Kern führt dabei zu einer erhöhten Tragfähigkeit und/oder Steifigkeit gegen Querkraft, Biegemomente oder Radiallasten. Gleichzeitig weist er aufgrund seines (im Verhältnis zum Gesamtbauteil) geringen Außendurchmessers ein ausreichendes Verformungsvermögen in Torsionsrichtung auf. Um lokal die Tragfähigkeit des Bauteils gegen Biegemomente in besonderem Maße zu erhöhen, kann darüber hinaus der beschriebene Kern lokal (insbesondere an den Enden des Bauteils) kegelförmig aufgeweitet sein. In einer günstigen Ausführungsform ist der Kern zu den radial außenliegenden Schichten mit Wendeln durch eine elastische Zwischenschicht entkoppelt.

Hinsichtlich der äußeren Gestalt kann der beschriebene Torsionsträger (auch bezeichnet als "das Bauteil") in Form eines Rohres oder als gerader oder gebogener Rundstab ausgeführt sein. In einer günstigen Ausführungsform können der Bauteil-Innen und/oder Außendurchmesser im Bereich der Enden des Rohres oder Stabs trichterförmig aufgeweitet sein. Diese Aufweitung kann in einen ebenen oder kegelförmigen Flansch oder in ein Kupplungsstück zum Anschluss an angrenzende Bauteile münden. Bei der Aufweitung des Durchmessers können die Wendel an den Enden des Bauteils strahlenförmig in den genannten ebenen oder kegelförmigen Flansch auslaufen. In einer günstigen Ausführungsform kann hier die Einleitung der Kräfte in die Wendel mittels Stoffschluss, Reibschluss oder Formschluss erfolgen.

In einer weiteren günstigen Ausführungsvariante kann der rohr- oder stabförmige Torsionsträger eine gebogene Form aufweisen. Er kann beispielsweise die äußere Gestalt einer Schraube bzw. einer Schraubenfeder aufweisen. Dabei können das Rohr bzw. der Stab um eine oder mehrere Achsen gekrümmt sein. Ebenso kann er zusätzlich zu einer Krümmung um die Rohr-Längsachse verdreht sein.

An seinen Enden kann das schraubenförmige Bauteil einen reduzierten Schraubendurchmesser und/oder eine veränderte Schrauben-Ganghöhe aufweisen.

In der Gestalt einer Schraubenfeder, die auf Zug oder Druck belastet werden kann, erfährt das gebogene Rohr bzw. der gebogene Stab vorwiegend Torsionsschnittlasten. Hierbei hat sich der gemäß der Erfindung beschriebene Aufbau mit gegenläufigen, zueinander entkoppelten Wendeln als besonders belastbar gezeigt. Der vorwiegend einachsige Spannungszustand in den Faserverbundwendeln ermöglicht eine höhere Auslastung des Faserverbundmaterials mit signifikant höheren zulässigen Spannungs- und Dehnungswerten. Somit hält der Torsionsträger (in Form einer Schraubenfeder) größeren Lasten und Amplituden stand. Oder im Umkehrschluss kann er bei einem vorgegebenen Niveau an Last und Bewegungsamplitude mit signifikant geringerem Materialeinsatz realisiert werden. Diese gilt in besonderem Maße bei zyklischen Belastungsformen.

Basierend auf dem beschriebenen Torsionsträger-Aufbau können verschiedene Vorrichtungen mit unterschiedlichen anwendungsspezifischen Bauformen realisiert werden. Hierunter fallen insbesondere eine Torsionsrohr-Feder, ein Torsionsstab, eine Schraubenfeder, eine Antriebswelle, eine biegeelastische Torsionswelle oder eine Ausgleichswelle (oder elastische Kupplung) mit Winkel- und Versatztoleranz.

In Bezug auf Anspruch 3 wird angemerkt, dass dieser eine mehrgängige Anordnung beschreibt, wobei über den Umfang verteilt jeweils mehrere Wendel angeordnet sind, die in einer axialen Richtung des Torsionsträgers vorzugsweise parallel zueinander verlaufen. Vorzugsweise ist mindestens 3-Gängigkeit, weiter bevorzugt mindestens eine 6-Gängigkeit vorgesehen, sodass eine Schicht mindestens drei Wendel, weiter bevorzugt mindestens sechs Wendel enthält. Für die meisten technischen Anwendungen hat sich eine Anordnung von jeweils mehr als 10 Wendeln über den Umfang verteilt als vorteilhaft erwiesen.

Das Verhältnis zwischen der Höhe der Wendel (in radialer Richtung betrachtet) und der Breite der Wendel liegt vorzugsweise zwischen 1:1 und 1:3.

Als Beispiele für Dämpfungswerkstoffe gemäß Anspruch 4 wird insbesondere auf Kautschuk oder Polyurethan sowie sonstige Werkstoffe mit ähnlichen elastischen Eigenschaften sowie Dämpfungseigenschaften verwiesen.

Von den in Anspruch 9 genannten Schichten sind insbesondere 3, 4, 5, 6, 7 oder 8 Schichten vorgesehen.

Zumindest eine der in Anspruch 10 genannten Schichten enthält vorzugsweise Wendel und Spalte in Bauteil-Längsrichtung, die zu einer erhöhten Biegesteifigkeit bzw. Biegetragfähigkeit führen.

Der in Anspruch 12 angesprochene Kern ist insbesondere gebildet aus einem vollzylindrischen Element (Vollstab) und/oder aus einem hohlzylindrischen Rohr, wobei beide insbesondere aus Faserverbundmaterialien aufgebaut sein können. Alternativ oder in Ergänzung dazu weist der Kern vorzugsweise Fasern mit Orientierung in Rohrlängsrichtung und/oder Fasern mit einer 45 Grad Orientierung (ggf. mit einer Toleranz von +/- 15 Grad) auf.

Bezüglich eines sich gemäß Anspruch 13 in Richtung der Bauteilenden verändernden Durchmessers kann in einer günstigen Ausführungsform ein sich trichterförmig nach außen aufweitender Innendurchmesser ausgebildet sein. Beispielsweise können damit die Bauteilenden in einen ebenen oder kegelförmig ausgebildeten Flansch münden oder in einer Kupplungskontur zum Anschluss an angrenzende Bauteile. Mit angrenzenden Bauteilen sind insbesondere solche Bauteile gemeint, die drehfest mit dem Torsionsträger gekoppelt werden sollen. Der Innendurchmesser ist dabei vorzugsweise durch die Innenkontur einer Innenwendel und/oder durch eine sich an die Innenseite anschließende Innenschicht vorgegeben.

### Definitionen und Erläuterungen

- Wendel: Der Wendel, auch Helix, Schraube, Schraubenlinie, zylindrische Spirale genannt, ist eine Kurve, die sich mit konstanter Steigung um den Mantel eines Zylinders windet. Er entsteht aus einer auf einem Radius gekrümmten Fläche (=Schicht, Ebene), die schraubenförmige Schlitze aufweist.
- Schicht: Rohrförmige Lage des Bauteils (auf einer zylindrischen Mantelfläche) mit definierter Funktion. Dies kann entweder eine Zwischenschicht oder eine Schicht mit sogenannten tragenden Wendeln sein (Außen- oder Innenwendeln zum Übertragen von Zug- und Druckspannungen).
- Gängigkeit: Ausführung einer Schicht als Wendel mit Spalten
- Zwischenschicht: Schicht zur Entkopplung von Dehnungen zwischen zwei benachbarten tragenden Schichten (Entkopplungsschicht zwischen zugübertragenden Außen- und druckübertragenden Innenwendeln)
- Holzylinder: hohler Kreiszylinder
- Ausgleichsspalt: Spalt zwischen den Wendeln einer Schicht, der insbesondere Dehnung zwischen den Wendeln ermöglicht. In diesem Kontext kann auch die Terminologie einer "geschlitzten" Anordnung verwendet werden, wobei aus einer geschlossenen Schicht Wendel und Ausgleichsspalte entstehen. Die Ausgleichspalte können gefüllt oder ungefüllt sein.
- Querdehnung: Dehnung Quer zur Faserrichtung, die auf Grund der verkürzten Dehnstrecke der Matrix signifikante Auswirkungen auf die Belastbarkeit von Faserverbundwerkstoffen hat, insbesondere bei wiederholten Belastungen (Fatigue).
- Richtungen: Unter der Haupterstreckungsrichtung der Wendel ist insbesondere die Wendel-Längsrichtung zu verstehen, d.h. die Richtung der größten Längenausdehnung einer Wendel, welche sich vorzugsweise auf einer helixförmigen Kurve um eine (ggf. nur virtuelle) Zylindermantelfläche erstreckt. Als Breite der Wendel wird die in der Mantelebene befindliche, zur Haupterstreckungsrichtung orthogonale Richtung verstanden. Als Höhe oder Dicke der Wendel wird die Erstreckung in der dritten Dimension der Wendel bezeichnet. Im Falle eines Rohres oder Stabes entspricht sie der Erstreckung in radialer Richtung.

### Ergänzende Hinweise zu den Figuren

Zeichnungen 2 bis 8 stellen die Schichten des Bauteils aus Gründen der besseren Übersichtlichkeit im abgewickelten Zustand dar.

### Bezugszeichenliste

- 1: Außenwendel
- 2: Zwischenschicht
- 3: Innenwendel
- 4: Ausgleichsspalt zwischen Außenwendeln
- 5: Ausgleichsspalt zwischen Innenwendeln
- 2a: Zwischenschicht im Bereich der Kreuzung von Wendeln benachbarter Schichten
- 2b1: Teil der Zwischenschicht mit Kontakt zu den Außenwendeln
- 2b2: Teil der Zwischenschicht mit Kontakt zu den Innenwendeln
- 2c1: Füllung des Ausgleichsspalts der Außenwendel
- 2c2: flächige Zwischenschicht
- 2c3: Füllung des Ausgleichsspalts der Innenwendel
- 2d: Zwischenschicht zwischen ovalen Wendeln, die nicht oder teilweise oder komplett in die Spalte zwischen den Wendeln hineinragt
- 11: strukturierte Zwischenschicht zur Verbesserung des Verformungsvermögens.

## Patentansprüche

1. Torsionsträger mit mindestens zwei Schichten aus je mindestens einer Wendel (1, 3) aus Faserverbundwerkstoff, wobei mindestens zwei Schichten eine zueinander gegenläufige Wendel-Drehrichtung aufweisen und zwischen diesen Schichten mindestens eine beabstandende elastische Zwischenschicht (2) angeordnet ist, wobei zwischen benachbarten Wendeln einer Schicht (1, 3) zumindest teilweise Spalte (4, 5) vorgesehen sind und/oder zwischen benachbarten Wendeln einer Schicht zumindest teilweise eine Füllung aus elastischem Füllmaterial angeordnet (2c1, 2c3) ist und/oder sich eine elastische Zwischenschicht zumindest teilweise bis in den Bereich zwischen benachbarte Wendel einer Schicht erstreckt.

2. Torsionsträger nach Anspruch 1, **dadurch gekennzeichnet, dass** die Hauptfaserrichtungen der Wendel (1, 3) in der Haupt-Erstreckungsrichtung der Wendel orientiert sind.

3. Torsionsträger nach einem oder mehreren der vorstehenden Ansprüche, **dadurch gekennzeichnet, dass** mindestens eine Schicht mehrere Wendel (1, 3) enthält.

4. Torsionsträger nach einem oder mehreren der vorstehenden Ansprüche, **dadurch gekennzeichnet, dass** eine oder mehrere Zwischenschichten (2) und/oder Füllungen zwischen Wendeln einer Schicht (2c1, 2c3) Hohlräume und/oder Einschnitte und/oder Löcher enthalten und/oder zumindest teilweise aus einem geschäumten Werkstoff und/oder aus einem Dämpfungswerkstoff gebildet sind.

5. Torsionsträger nach einem oder mehreren der vorstehenden Ansprüche, **dadurch gekennzeichnet, dass** mindestens ein Teil der Wendel (1, 3), an einer zu einer Zwischenschicht orientierten Fläche zugentlastende Fasern mit einer Orientierung quer zur Haupterstreckungsrichtung der Wendel aufweisen.

6. Torsionsträger nach einem oder mehreren der vorstehenden Ansprüche, **dadurch gekennzeichnet, dass** der Torsionsträger an seinen Enden einen sich trichterförmig vergrößernden Innen- und/oder Außendurchmesser aufweist und/oder im Bereich der Enden des Torsionsträgers eine veränderte Steigung der Wendel (1, 3) vorliegt.

7. Torsionsträger nach einem oder mehreren der vorstehenden Ansprüche, **dadurch gekennzeichnet, dass** die Wendel (1, 3) jeweils im Bereich ihrer Enden eine erhöhte Schichtdicke aufweisen und/oder an den Enden der Wendel (1, 3) Endstücke angebracht sind.

8. Torsionsträger nach einem oder mehreren der vorstehenden Ansprüche, **dadurch gekennzeichnet, dass** die Wendel (1, 3) jeweils im Bereich ihrer Enden eine reduzierte Breite aufweisen und diese damit ein erhöhtes Verformungsvermögen bei Biegung in Mantelebene aufweisen.

9. Torsionsträger nach einem oder mehreren der vorstehenden Ansprüche, **dadurch gekennzeichnet, dass** mehr als zwei zueinander durch elastische Zwischenschichten (2) entkoppelte Schichten mit Wendeln (1, 3) vorgesehen sind.

10. Torsionsträger nach einem oder mehreren der vorstehenden Ansprüche, **dadurch gekennzeichnet, dass** Schichten mit mindestens drei unterschiedlichen Wendel-Orientierungen vorgesehen sind, die durch Zwischenschichten (2) beabstandet sind.

11. Torsionsträger nach dem vorstehenden Anspruch, wobei zumindest eine der Schichten Wendel und Spalte in Bauteil-Längsrichtung enthält.

12. Torsionsträger nach einem oder mehreren der vorstehenden Ansprüche, **dadurch gekennzeichnet, dass** radial innenseitig der Schichten mit Wendeln ein die Biegesteifigkeit oder Querkrafttragfähigkeit erhöhender Kern angeordnet ist.

13. Torsionsträger nach einem oder mehreren der vorstehenden Ansprüche, **dadurch gekennzeichnet, dass** in Richtung seiner Enden ein sich verändernder Innen- und/oder Außendurchmesser ausgebildet ist.

14. Torsionsträger nach einem oder mehreren der vorstehenden Ansprüche, **dadurch gekennzeichnet, dass** ein aus Schichten mit Wendeln (1, 3) bestehendes Rohr oder ein aus Schichten mit Wendeln (1,3) bestehender Rundstab die äußere Gestalt einer Schraube aufweist.

15. Torsionsrohr-Feder, Torsionsstab, biegeelastische Torsionswelle, Antriebswelle oder Schraubenfeder bestehend aus einem Torsionsträger nach einem oder mehreren der vorstehenden Ansprüche.

## Claims

1. A torsion carrier having at least two layers, each consisting of at least one spiral coil (1, 3) made of composite fiber material, wherein at least two layers have a counterrotating spiral coil orientation and at least one spacing elastic intermediate layer (2) is arranged between said layers, wherein gaps (4, 5) are at least partially provided between adjacent spiral coils of a layer (1, 3), and/or a filling (2c1, 2c3) of elastic filling material is at least partially arranged between adjacent spiral coils of a layer, and/or an elastic intermediate layer at least partially extends into the region between adjacent spiral coils of a layer.

2. The torsion carrier according to claim 1, **characterized in that** the main fiber directions of the spiral coils (1, 3) are oriented in the main extension direction of the spiral coils.

3. The torsion carrier according to one or several of the preceding claims, **characterized in that** at least one layer contains a plurality of spiral coils (1, 3).

4. The torsion carrier according to one or several of the preceding claims, **characterized in that** one or more intermediate layers (2) and/or fillings (2c1, 2c3) between spiral coils of a layer contain cavities and/or incisions and/or holes and/or are at least partially formed from a foamed material and/or a damping material.

5. The torsion carrier according to one or several of the preceding claims, **characterized in that** at least a portion of the spiral coils (1, 3), on a surface oriented toward an intermediate layer, has tension-relieving fibers with an orientation transverse to the main extension direction of the spiral coils.

6. The torsion carrier according to one or several of the preceding claims, **characterized in that** the ends of the torsion carrier have an inside and/or outside diameter increasing in a funnel-shaped manner, and/or the pitch of the spiral coils (1, 3) change in the region of the ends of the torsion carrier.

7. The torsion carrier according to one or several of the preceding claims, **characterized in that** the spiral coils (1, 3) each have an increased layer thickness in the region of their ends, and/or end pieces are attached to the ends of the spiral coils (1, 3).

8. The torsion carrier according to one or several of the preceding claims, **characterized in that** the spiral coils (1, 3) each have a reduced width in the region of their ends and said spiral coils thus have an increased deformation capability in the event of bending in the circumferential plane.

9. The torsion carrier according to one or several of the preceding claims, **characterized in that** more than two layers of spiral coils (1, 3) that are decoupled from one another by elastic intermediate layers (2) are provided.

10. The torsion carrier according to one or several of the preceding claims, **characterized in that** layers having at least three different spiral coil orientations are provided, said layers being spaced by intermediate layers (2).

11. The torsion carrier according to the preceding claim, wherein at least one of the layers contains spiral coils and gaps in the longitudinal direction of the component.

12. The torsion carrier according to one or several of the preceding claims, **characterized in that** a core increasing the flexural rigidity or transverse force load-bearing capability is arranged radially on the inside of the layers of spiral coils.

13. The torsion carrier according to one or several of the preceding claims, **characterized in that** a changing inside and/or outside diameter is formed towards its ends.

14. The torsion carrier according to one or several of the preceding claims, **characterized in that** a tube consisting of layers of spiral coils (1, 3) or a round bar consisting of layers of spiral coils (1, 3) has the external shape of a screw.

15. A torsion tube spring, torsion bar, flexurally elastic torsion shaft, drive shaft or helical spring consisting of a torsion carrier according to one or several of the preceding claims.

## Revendications

1. Support de torsion comprenant au moins deux couches composées chacune d'au moins une structure hélicoïdale (1, 3) en matériau composite renforcé par des fibres, au moins deux couches présentant un sens de rotation d'hélice opposé l'un à l'autre et au moins une couche intermédiaire élastique (2) séparatrice étant disposée entre ces couches, des écarts (4, 5) étant prévus au moins partiellement entre des structures hélicoïdales adjacentes d'une couche (1, 3) et/ou un remplissage en matériau de remplissage élastique (2c1, 2c3) est disposé au moins partiellement entre des structures hélicoïdales adjacentes d'une couche (1, 3) et/ou une couche intermédiaire élastique s'étend au moins partiellement jusque dans la zone entre des structures hélicoïdales adjacentes d'une couche.

2. Support de torsion selon la revendication 1, **caractérisée en ce que** les directions principales des fibres des structures hélicoïdales (1, 3) sont orientées dans la direction d'extension principale des structures hélicoïdales.

3. Support de torsion selon une ou plusieurs des revendications précédentes, **caractérisé en ce qu'**au moins une couche contient plusieurs structures hélicoïdales (1, 3).

4. Support de torsion selon une ou plusieurs des revendications précédentes, **caractérisé en ce qu'**une ou plusieurs couches intermédiaires (2) et/ou remplissages entre les structures hélicoïdales d'une couche (2c1, 2c3) contiennent des cavités et/ou des entailles et/ou des trous et/ou sont formés au moins partiellement d'un matériau expansé et/ou d'un matériau d'amortissement.

5. Support de torsion selon une ou plusieurs des revendications précédentes, **caractérisée en ce qu'**au moins une partie des structures hélicoïdales (1, 3) présente des fibres de décharge de traction sur une surface orientée vers une couche intermédiaire, avec une orientation transversale à la direction d'extension principale des structures hélicoïdales.

6. Support de torsion selon une ou plusieurs des revendications précédentes, **caractérisé en ce que** le support de torsion présente à ses extrémités un diamètre intérieur et/ou extérieur qui s'agrandit en forme d'entonnoir et/ou **en ce qu'**il existe dans la zone des extrémités du support de torsion un pas modifié des structures hélicoïdales (1, 3).

7. Support de torsion selon une ou plusieurs des revendications précédentes, **caractérisé en ce que** les structures hélicoïdales (1, 3) présentent chacune une épaisseur de couche accrue dans la zone de leur extrémité et/ou des pièces d'extrémité sont montées aux extrémités des structures hélicoïdales (1, 3).

8. Support de torsion selon une ou plusieurs des revendications précédentes, **caractérisée en ce que** les structures hélicoïdales (1, 3) présentent chacune une largeur réduite au niveau de leur extrémité et que celles-ci présentent ainsi une capacité de déformation accrue en cas de flexion au niveau de la gaine.

9. Support de torsion selon une ou plusieurs des revendications précédentes, **caractérisée en ce que** plus de deux couches avec des structures hélicoïdales (1, 3) sont prévues, découplées l'une de l'autre par des couches intermédiaires élastiques (2).

10. Support de torsion selon une ou plusieurs des revendications précédentes, **caractérisée en ce que** des couches avec au moins trois orientations d'hélices différentes sont prévues, qui sont séparées par des couches intermédiaires (2).

11. Support de torsion selon la revendication précédente, dans laquelle au moins une des couches comprend des structures hélicoïdales et des écarts dans la direction longitudinale du composant.

12. Support de torsion selon une ou plusieurs des revendications précédentes, **caractérisée en ce qu'**un noyau augmentant la résistance à la flexion ou la résistance aux forces transversales est disposé radialement à l'intérieur des couches avec des structures hélicoïdales.

13. Support de torsion selon une ou plusieurs des revendications précédentes, **caractérisée en ce qu'**un diamètre intérieur et/ou extérieur variable est formé en direction de ses extrémités.

14. Support de torsion selon une ou plusieurs des revendications précédentes, **caractérisé en ce qu'**un tube constitué de couches avec des structures hélicoïdales (1, 3) ou une barre ronde constituée de couches avec des structures hélicoïdales (1, 3), présente la forme extérieure d'une vis.

15. Tube-ressort de torsion, barre de torsion, arbre de torsion élastique en flexion, arbre d'entraînement ou ressort hélicoïdal constitué d'un support de torsion selon une ou plusieurs des revendications précédentes.
